# EUROPÄISCHE PATENTANMELDUNG

(11) **EP 2 153 976 A1**
(43) Veröffentlichungstag der Anmeldung: **17.02.2010**
(21) Anmeldenummer: 09010274.0
(22) Anmeldetag: 10.08.2009
(51) Int. Cl.: B29C 63/00, B32B 5/16, B32B 9/02

(54) **Profilleiste**

(30) Priorität: 16.08.2008 DE 102008038008
(71) Anmelder: Rehau Ag + Co, 95111 Rehau (DE)
(72) Erfinder: Krämer, Uwe, 95111 Rehau (DE); Rothemund, Jörg, 95111 Rehau (DE)

(57) **Zusammenfassung**

Die Erfindung betrifft eine Profilleiste. Um eine Profilleiste bereitzustellen, welche die Eigenschaften einer Profilleiste aus Leder in Bezug auf Haptik und Optik aufweist, aber gegenüber der Profilleiste aus Leder wesentlich leichter verarbeitbar ist, ist erfindungsgemäß vorgesehen, dass die Profilleiste einen mehrschichtigen Aufbau aufweist, wobei zumindest eine Schicht der Profilleiste ein zerkleinertes Ledermaterial enthält und zumindest eine Schicht der Profilleiste im Extrusionsverfahren gefertigt ist.

## Beschreibung

Die Erfindung betrifft eine Profilleiste. Derartige Profilleisten werden eingesetzt, um Gegenstände wie Möbelstücke oder dergleichen zu dekorieren.

Auf dem Markt besteht ein Bedarf nach hochwertigen Produkten bei erheblicher Produktvielfalt. Man kennt Profilleisten aus den Echtmaterialien Metall, Glas und dergleichen. Profilleisten aus Leder werden in der Industrie nicht eingesetzt. Anstelle dessen wird entweder ein Lederimitat verwendet oder z.B. bei Küchenfronten wird eine Komplettummantelung mit Echtleder vorgenommen.

Bei Lederimitaten ist weder die charakteristische Optik noch die entsprechende Haptik noch der typische Geruch des Echtleders gegeben. Die Verwendung von Echtleder ist technisch sehr aufwändig und entsprechend teuer.

Der Erfindung liegt die Aufgabe zugrunde, eine Profilleiste bereitzustellen, welche die Eigenschaften einer Profilleiste aus Leder in Bezug auf Haptik und Optik aufweist, aber gegenüber dieser Profilleiste wesentlich einfacher und kostengünstiger verarbeitbar ist.

Um die der Erfindung zugrunde liegende Aufgabe zu lösen, stellt die Erfindung die Profilleiste nach Anspruch 1 bereit, wobei die Profilleiste einen mehrschichtigen Aufbau aufweist, zumindest eine Schicht der Profilleiste ein zerkleinertes Ledermaterial enthält und zumindest eine Schicht der Profilleiste im Extrusionsverfahren gefertigt ist. Die mehrschichtige Struktur der erfindungsgemäßen Profilleiste ermöglicht eine funktionale Auslegung der Profilleiste. Die das zerkleinerte Ledermaterial enthaltende Schicht vermittelt der Profilleiste die charakteristischen Eigenschaften von Leder im Hinblick auf Geruch, Haptik und Optik. In zerkleinerter Form kann das Ledermaterial in eine Matrix, z.B. Kunststoff, eingebettet werden und beliebig geformt werden, was mit Echtleder nicht möglich ist.

Das zerkleinerte Ledermaterial wird vorzugsweise aus Lederresten bzw. -abfällen gewonnen und liegt in einer Vielzahl von Lederfasern vor. Die zumindest eine weitere Schicht ermöglicht eine leichte Verarbeitung und Montage der erfindungsgemäßen Profilleiste, indem sie der Profilleiste gegenüber dem einschichtigen Aufbau eine wesentlich steifere und stabilere Struktur verleiht. Es erweist sich als günstig, wenn zumindest eine Schicht der Profilleiste, vorzugsweise zwei, mehrere oder alle Schichten der Profilleiste, im Extrusionsverfahren gefertigt ist/sind. Die im Extrusionsverfahren gefertigte Schicht kann die das zerkleinerte Ledermaterial enthaltende Schicht und/oder die zumindest eine weitere Schicht sein. Die Fertigungstechnik der Extrusion erweist sich als besonders wirtschaftlich und praktisch, weil dadurch ein stabiles und zugfestes Stranggut geschaffen wird, das den in der Praxis auftretenden Belastungen bei den bevorzugten Anwendungen der Profilleiste standhält. Somit ist die erfindungsgemäße Profilleiste gegenüber dem Echtleder wesentlich leichter verarbeitbar, insbesondere leichter zerteilbar und leichter montierbar. In Abhängigkeit von dem bevorzugten Anwendungsfall kann es von Vorteil sein, wenn das Ledermaterial auf eine Größe von etwa 0,1 bis 50 mm zerkleinert wird. Das Ledermaterial liegt vorzugsweise als Vielzahl von Fasern mit einer Faserlänge von etwa 0,1 bis 50 mm vor. Ein Anteil des zerkleinerten Ledermaterials in der Dekorschicht von wenigstens 5 Gew.-% reicht i.d.R. aus, um der Dekorschicht den charakteristischen Geruch von Leder zu vermitteln, wenn man davon ausgeht, dass die restlichen 95 Gew.-% der Material aus im wesentlichen geruchsneutralem Material bestehen. Ein Anteil des zerkleinerten Ledermaterials in der Dekorschicht von wenigstens 30 Gew.-% reicht i.d.R. aus, um der Dekorschicht die charakteristische Leder-Haptik zu vermitteln, insbesondere bei der Verwendung von Lederfasern. Die erfindungsgemäße Profilleiste weist die Eigenschaften einer Leder-Profilleiste in Bezug auf Haptik und Optik auf, und ist gegenüber der Leder-Profilleiste wesentlich leichter herstellbar und verarbeitbar.

Es erweist sich als günstig, wenn die Profilleiste im Koextrusionsverfahren gefertigt ist. Diese Fertigungstechnik erweist sich als besonders wirtschaftlich und praktisch, da durch das Koextrusionsverfahren die Schichten der erfindungsgemäßen Profilleiste zuverlässig und dauerhaft verbunden werden können.

Es kann sich als vorteilhaft erweisen, wenn die Profilleiste eine Dekorschicht aufweist, die das zerkleinerte Ledermaterial enthält und die an einer Sichtseite der Profilleiste sichtbar ist. Das in der Dekorschicht enthaltene, zerkleinerte Ledermaterial verleiht der Dekorschicht in Bezug auf Optik und Haptik besonders realistisch die charakteristischen Eigenschaften einer Leder-Profilleiste.

Es liegt insbesondere im Rahmen der vorliegenden Erfindung, dass die Profilleiste als Kantenband, Wandanschlussprofil, Fensterprofil oder Rollladenprofil ausgebildet ist. Das Kantenband hat die Funktion, ein Möbelstück, z.B. eine Küchenarbeitsplatte oder dergleichen, zu schützen, insbesondere ungeschützte Stellen wie Schnittstellen oder dergleichen zu kaschieren und zu versiegeln. Die Verarbeitung und Montage der erfindungsgemäßen Profilleiste gestaltet sich bei den genannten bevorzugten Anwendungsfällen besonders einfach.

Es kann sich als hilfreich erweisen, wenn die Dekorschicht ein Biopolymer, vorzugsweise Kollagen enthält. Kollagen ist ein hochmolekularer, faserförmiger Eiweißkörper, welcher ausschließlich in der Haut von Säugetieren vorkommt. Kollagen ist somit ein Biopolymer, welches als Ausgangsmaterial für die Herstellung von Leder fungiert.

Es kann sich als vorteilhaft erweisen, wenn die Dekorschicht Lederfasern enthält. Lederfasern können aus Lederabfällen leicht gewonnen werden und eignen sich hervorragend für die Anwendung im Rahmen der erfindungsgemäßen Profilleiste. Die Dekorschicht umfasst vorzugsweise Kollagen, Lederfasern und weitere Additive, welche in einem bevorzugten Mischverhältnis vermischt werden, um die charakteristischen Ledereigenschaften im Hinblick auf Geruch, Haptik und Optik aufzuweisen.

Es kann auch von Vorteil sein, wenn ein Anteil des zerkleinerten Ledermaterials in der das zerkleinerte Ledermaterial enthaltenden Schicht, vorzugsweise der Dekorschicht, zwischen 10 und 90 Gew.-%, vorzugsweise zwischen 30 und 70 Gew.-%, bevorzugt zwischen 40 und 60 Gew.-%, und besonders bevorzugt 50 Gew.-% beträgt. Derartige Mischverhältnisse haben sich in Versuchen bewährt. Je größer der Anteil des zerkleinerten Ledermaterials ist, umso stärker sind die typischen Ledereigenschaften in der Profilleiste ausgeprägt.

Es kann sich als günstig erweisen, wenn die Dekorschicht aus einem thermoplastisch verarbeitbaren Kunststoff, vorzugsweise aus einem Polyolefin oder aus Acrylnitril-Butadien-Styrol oder aus Polymethylmethacrylat oder aus Polyethylenterephthalat oder aus Polyvinylchloriden oder aus Polycarbonaten bestehen bzw. besteht oder aus Mischungen dieser Kunststoffe.
Derartige Materialien eignen sich hervorragend als Bindemittel bzw. Matrixmaterial für den Einsatz in der erfindungsgemäßen Profilleiste, da sie das zerkleinerte Ledermaterial leicht aufnehmen können, um damit ein thermoplastisch verarbeitbares Gemisch zu bilden.

Es kann von großem Nutzen sein, wenn die Dekorschicht einen Kunststoff mit einer Schmelztemperatur von weniger als + 220 °C, vorzugsweise weniger als + 200 °C, bevorzugt weniger als + 150 °C aufweist. Diese Schmelztemperatur liegt unterhalb eines Temperaturwerts, bei welchem viele gängige zerkleinerte Ledermaterialen, insbesondere Lederfasern, denaturieren. Bei einer derartigen Schmelztemperatur kann der als Bindemittel einzusetzende Kunststoff optimal aufgeschmolzen werden, um sich mit dem Ledermaterial zu vermischen, ohne dass das zerkleinerte Ledermaterial geschädigt wird.

Es kann aber auch vorteilhaft sein, wenn ein Anteil des Kunststoffs in der Dekorschicht zwischen 90 und 10 Gew.-%, vorzugsweise zwischen 70 und 30 Gew.-%, bevorzugt zwischen 60 und 40 Gew.-%, und besonders bevorzugt 50 Gew.-% beträgt. Durch gezieltes Abmischen des als Bindemittel einzusetzenden Kunststoffs im Verhältnis zu dem zerkleinerten Ledermaterial, können die Eigenschaften der erfindungsgemäßen Profilleiste optimal auf den bevorzugten Anwendungsfall abgestimmt werden.

Es kann sich als praktisch erweisen, wenn die Profilleiste eine Trägerschicht aufweist, die eine gegenüber der Dekorschicht unterschiedliche chemische Zusammensetzung aufweist. Als Trägerschicht kann beispielsweise ein Schicht eingesetzt werden, die der erfindungsgemäßen Profilleiste eine besonders stabile und besonders steife Struktur verleiht, so dass die Profilleiste leichter verarbeitet und montiert werden kann.

Es kann sich als hilfreich erweisen, wenn die Trägerschicht aus einem thermoplastisch verarbeitbaren Kunststoff, vorzugsweise aus einem Polyolefin oder aus Acrylnitril-Butadien-Styrol oder aus Polymethylmethacrylat oder aus Polyethylenterephthalat oder aus Polyvinylchloriden oder aus Polycarbonaten bestehen bzw. besteht oder aus Mischungen dieser Kunststoffe.
Der thermoplastische Kunststoff ist selbst leicht verarbeitbar und weist Materialeigenschaften auf, die im Rahmen der vorliegenden Erfindung besonders vorteilhaft zur Geltung gebracht werden können.

Es liegt insbesondere im Rahmen der vorliegenden Erfindung, dass als Bindemittel in der Dekorschicht und als Hauptkomponente in der Trägerschicht identische Materialien, vorzugsweise identische thermoplastische Kunststoffe eingesetzt werden, und dass die Dekorschicht und die Trägerschicht stoffschlüssig verbunden und/oder einstückig hergestellt sind.

Es kann nützlich sein, wenn die Dekorschicht und/oder die Trägerschicht Füll- und/oder Verstärkungsstoffe aufweist, vorzugsweise mineralische Füllstoffe wie Kreide, Talkum und dergleichen bzw. organische/anorganische Verstärkungsstoffe wie Glasfasern, Kohlefasern und dergleichen. Bei manchen Anwendungen kann eine höhere Traglastfähigkeit bzw. Steifigkeit der Profilleiste wünschenswert sein, die durch die Füll- und/oder Verstärkungsstoffe erreichbar ist.

Dazu kann sich als vorteilhaft erweisen, wenn ein Anteil der Füll- und/oder Verstärkungsstoffe in der Dekorschicht und/oder der Trägerschicht zwischen 5 und 30 Gew.-%, vorzugsweise zwischen 5 und 25 Gew.-%, bevorzugt zwischen 7 und 20 Gew.-% beträgt. Eine Trägerschicht ohne Füll- und/oder Verstärkungsstoffe wird z.B. dort eingesetzt, wo eine hohe Schlagzähigkeit erwünscht ist.

Es kann sich als hilfreich erweisen, wenn die Trägerschicht der Dekorschicht unmittelbar benachbart angeordnet ist. So kann ohne zwischenliegende Haftvermittlerschicht ein besonders kompakter, stabiler und leicht verarbeitbarer Materialverbund geschaffen werden.

Es kann von Vorteil sein, wenn die Profilleiste eine Breite zwischen 10 und 150 mm, vorzugsweise zwischen 20 und 100 mm, bevorzugt 43 mm aufweist. Diese Abmessungen sind für die meisten gängigen Anwendungsfälle vorteilhaft, z.B. für den Anwendungsfall als Kantenband zur Verkleidung von Möbelkanten. Dazu wird die Profilleiste vorzugsweise mit ca. 5 bis 30 % Übermaß gegenüber der Breite einer zu dekorierenden Kante gefertigt, wobei der sich bei der Montage ergebende Überstand i.d.R. im Wege einer spanabhebenden Nachbearbeitung nachträglich entfernt wird (z.B. 19 mm Spanplatte, 23 mm Kante).

Es kann sich als nützlich erweisen, wenn die Profilleiste eine Dicke zwischen 0,1 und 10,0 mm, vorzugsweise zwischen 0,5 und 5,0 mm, bevorzugt 1,5 mm aufweist. Bei einer derartigen Dicke ist die Profilleiste beispielsweise sehr leicht von einem gestreckten Zustand in einen aufgerollten Zustand überführbar, und umgekehrt, ohne Schaden zu erleiden. So ist die Profilleiste transportfähig und lagerfähig.

Es kann aber auch vorteilhaft sein, wenn ein Verhältnis einer Dicke der Dekorschicht zu einer Dicke der Trägerschicht zwischen 0,1 und 10, vorzugsweise zwischen 1 und 5, bevorzugt 4 beträgt. Je nach dem bevorzugten Anwendungsfall und dem gewünschten Eigenschaftsprofil kann das Verhältnis der Dicke der Dekorschicht zu der Dicke der Trägerschicht innerhalb der vorgegebenen Grenzen eingestellt werden.

Es hat sich in Versuchen als besonders vorteilhaft herausgestellt, wenn das Verhältnis der Dicke der Dekorschicht zu der Dicke der Trägerschicht etwa 4 beträgt, wobei die Dekorschicht ca. 1,2 mm dick ist.

Es kann vorteilhaft sein, wenn die Dekorschicht und/oder die Trägerschicht wenigstens einen Farbstoff enthält, beispielsweise ein Pigment. Dadurch kann auf einfachem Wege eine bevorzugte Einfärbung der Profilleiste erreicht werden.

Es kann auch praktisch sein, wenn die Trägerschicht in einem Farbton eingefärbt ist, welcher im Wesentlichen einem Grundfarbton der Dekorschicht entspricht. Dadurch kann der Naturfarbton des zerkleinerten Ledermaterials zusätzlich verstärkt und hervorgehoben werden, was den optischen und ästhetischen Gesamteindruck der erfindungsgemäßen Profilleiste weiter aufwertet.

Es kann sich als nützlich erweisen, wenn die Profilleiste, vorzugsweise an einer Sichtseite, eine Prägung aufweist. Die Prägung beeinflusst die haptische Wahrnehmung beim Berühren der Profilleiste.

Dazu kann es sich als vorteilhaft herausstellen, wenn die Prägung eine Lederoberflächenstruktur nachbildet. Durch die Prägung kann Echtleder im Hinblick auf Optik und Haptik noch besser nachgebildet werden.

Es kann sich als praktisch erweisen, wenn die Profilleiste eine Imprägnierung und/oder Beschichtung mit Wachs und/oder Lack aufweist. Durch diese Maßnahme wird die Profilleiste gegenüber schädlichen Umwelteinflüssen geschützt und die Alterung wird verlangsamt. Dadurch kann die Lebensdauer der Profilleiste erheblich verlängert werden. Eine Prägung der Profilleiste kann vor und/oder nach der Imprägnierung und/oder Beschichtung erfolgen. Zudem kann es nützlich sein, wenn die Profilleiste an einer der Sichtseite abgewandten Unterseite einen Haftvermittler aufweist. Dadurch kann die Profilleiste schnell und ohne weitere Hilfsmittel an einem Gegenstand montiert werden.

Eine weitere Ausführung der Erfindung betrifft einen Gegenstand, insbesondere ein Möbelstück, eine Möbelbauplatte, ein Holzwerkstoffelement oder dergleichen, mit einer Profilleiste nach einer der vorangegangenen Ausführungen. Durch die Profilleiste können offenliegende Kanten des Gegenstands optisch kaschiert und versiegelt werden, um ein Eindringen von Feuchtigkeit und/oder Schmutz zu verhindern. So wird der Gegenstand durch die Profilleiste geschützt und in optischer sowie ästhetischer Hinsicht aufgewertet.

Im Rahmen der Erfindung wird der Begriff Möbelbauplatte bzw. Holzwerkstoffelement so verstanden, dass das Element aus natürlichem Holz bzw. aus Einzelelementen aus natürlichem Holz oder aus einem aus Holz hergestellten Material besteht. Elemente, die aus Holz bestehenden Einzelelementen hergestellt sind, können beispielsweise Tischlerplatten sein. Materialien, die aus Holz hergestellt werden, können mitteldichte Faserplatten (MDF), hochdichte Faserplatten (HDF), Hartfaserplatten, Spanplatten sein.

Es kann sich als nützlich erweisen, wenn die Profilleiste mit einer der Sichtseite abgewandten Unterseite an einer Kante des Gegenstands angebracht ist. Die das zerkleinerte Ledermaterial enthaltende Schicht definiert vorzugsweise die Sichtseite der Profilleiste und vermittelt so den Eindruck, den Leder im Hinblick auf Haptik, Optik und Geruch vermitteln würde. Durch den erfindungsgemäßen Schichtaufbau ist die erfindungsgemäße Profilleiste allerdings wesentlich leichter handhabbar und verarbeitbar als eine vollständig aus Leder bestehende Profilleiste.

Eine weitere Ausführung der Erfindung betrifft ein Verfahren zur Herstellung einer Profilleiste, wobei das Verfahren die folgenden Schritte umfasst:
a) Überführen eines Werkstoffgemischs mit einem Anteil an zerkleinertem Ledermaterial in einen Zustand, in welchem das Werkstoffgemisch im Extrusionsverfahren thermoplastisch verarbeitbar ist,
b) Überführen eines thermoplastischen Werkstoffs in einen Zustand, in welchem der thermoplastische Werkstoff im Extrusionsverfahren verarbeitbar ist,
c) Verarbeiten des Werkstoffgemischs und des thermoplastischen Werkstoffs
im Wege der Koextrusion zu einer Profilleiste nach einer der vorangegangenen Ausführungen.
Das bevorzugte Ausführungsbeispiel der vorliegenden Erfindung wird nachstehend mit Bezug auf die beiliegende Zeichnung beschrieben.

### Kurze Beschreibung der Zeichnung

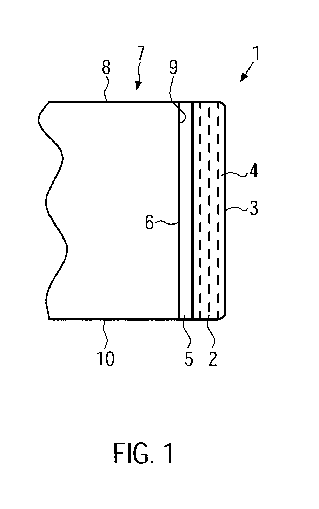

- Figur 1: zeigt einen Gegenstand mit der erfindungsgemäßen Profilleiste, wobei der Gegenstand als Möbelplatte und die Profilleiste als Kantenband ausgebildet ist, wobei das Kantenband an einer stirnseitigen Kante der Möbelplatte montiert ist.

### Detaillierte Beschreibung des bevorzugten Ausführungsbeispiels

Die Erfindung betrifft eine Profilleiste 1 für die Möbelindustrie, wobei die Profilleiste 1 einen mehrschichtigen Aufbau aufweist, wobei zumindest eine Schicht 2 der Profilleiste 1 ein zerkleinertes Ledermaterial 4 enthält und zumindest eine Schicht 2 der Profilleiste 1 im Extrusionsverfahren gefertigt ist.
Der Schichtaufbau der erfindungsgemäßen Profilleiste 1 wird im Folgenden erläutert:
Eine an einer Sichtseite 3 der Profilleiste 1 sichtbare Dekorschicht 2 enthält Kollagen als Biopolymer, Lederfasern 4 als zerkleinertes Ledermaterial 4, einen thermoplastischen Kunststoff als Bindemittel/Matrix und weitere Additive/Zuschlagstoffe, um ein bevorzugtes Eigenschaftsprofil der Dekorschicht 2 einzustellen. Das zerkleinerte Ledermaterial 4 ist in feiner, vorzugsweise gleichmäßiger Verteilung, in der Matrix eingebettet. Ein Anteil des zerkleinerten Ledermaterials 4 in der Dekorschicht 2 beträgt zwischen 10 und 90 Gew.-%, vorzugsweise zwischen 30 und 70 Gew.-%, bevorzugt zwischen 40 und 60 Gew.-%, und besonders bevorzugt 50 Gew.-%. Ein Anteil des thermoplastischen Kunststoffs in der Dekorschicht 2 beträgt vorzugsweise zwischen 90 und 10 Gew.-%, vorzugsweise zwischen 70 und 30 Gew.-%, bevorzugt zwischen 60 und 40 Gew.-%, und besonders bevorzugt ca. 50 Gew.-%. Der als Bindemittel in der Dekorschicht 2 enthaltene thermoplastische Kunststoff ist bevorzugt ein Polyolefin, insbesondere Polypropylen oder Polyäthylen, Polyvinylchlorid oder Acrylnitril-Butadien-Styrol. Der Kunststoff weist eine Schmelztemperatur von weniger + 220 °C auf. Die Schmelztemperatur ist so gewählt, um die Lederfasern beim Aufschmelzen des Kunststoffs nicht zu schädigen.

Eine Trägerschicht 5 weist eine gegenüber der Dekorschicht 2 unterschiedliche chemische Zusammensetzung auf, enthält aber vorzugsweise identische Materialbestanteile wie die Dekorschicht 2. Die Trägerschicht 5 besteht vorzugsweise aus dem gleichen thermoplastischen Kunststoff, der in der Dekorschicht 2 als Bindemittel eingesetzt wird, wobei die Dekorschicht 2 und die Trägerschicht 5 vorzugsweise im Koextrusionsverfahren einstückig hergestellt und stoffschlüssig verbunden sind.

Bei Bedarf ist die Trägerschicht 5 verstärkt, beispielsweise durch Beimischung von mineralischen Füllstoffen wie Talkum, Kreide und dergleichen oder Fasern, vorzugsweise Glasfasern. Der Anteil des Verstärkungsmaterials in der Trägerschicht 5 beträgt vorzugsweise zwischen 3 und 25 Gew.-%. Die Dekorschicht 2 kann ebenfalls durch Beimischung von Talkum oder Fasern, vorzugsweise Glasfasern, verstärkt sein, wobei der Anteil des Verstärkungsmaterials in der Dekorschicht 2 vorzugsweise ebenfalls zwischen 3 und 25 Gew-% beträgt.
Die Profilleiste 1 kann bei Bedarf eine Imprägnierung und/oder Schutzbeschichtung mit Wachs und/oder Lack aufweisen. Die Imprägnierung und/oder Schutzbeschichtung wird vorzugsweise auf die Sichtseite 3 der Profilleiste 1 aufgetragen.

Ebenfalls bei Bedarf kann die Profilleiste 1 eine Prägung aufweisen. Die Prägung der Profilleiste 1 kann unabhängig von einer Imprägnierung und/oder Schutzbeschichtung der Profilleiste 1 erfolgen. Die Prägung kann aber auch zusätzlich zu einer Imprägnierung und/oder Schutzbeschichtung vorgesehen werden und erfolgt dann wahlweise vor und/oder nach der Imprägnierung und/oder Schutzbeschichtung.

Weiterhin bei Bedarf kann zumindest eine Schicht der Profilleiste 1 einen Farbstoff enthalten, um möglichst eine originalgetreue Einfärbung der Profilleiste 1 in einem gängigen Lederfarbton zu erhalten.

Auf der Unterseite der Profilleiste 1 kann eine Haftvermittlerschicht vorgesehen sein.

Figur 1 zeigt einen erfindungsgemäßen Gegenstand 7 mit einer Oberseite 8, einer Stirnseite 9 und einer Unterseite 10, ebenso wie die an der Stirnseite 9 des Gegenstands 7 angebrachte, erfindungsgemäße Profilleiste 1. Der Gegenstand 7 ist im vorliegenden Ausführungsbeispiel eine im Wesentlichen aus Holz gefertigte Möbelplatte, z.B. Küchenarbeitsplatte oder Tischplatte.

Die Profilleiste 1 ist mit der Unterseite 6 an der stirnseitigen Kante 9 des Gegenstands 7 angebracht, vorzugsweise angeklebt oder angeschweißt, und ist derart nachbearbeitet, dass die Seitenränder der Profilleiste 1 mit der Oberseite 8 und der Unterseite 10 des Gegenstands 7 bündig abschließen. Die längsrandseitigen Sichtkanten der Profilleiste 1 sind durch spanabhebende Bearbeitung abgerundet.

In diesem Ausführungsbeispiel umfasst die erfindungsgemäße Profilleiste 1 eine Dekorschicht 2 mit einem Lederfaseranteil von 60 Gew.-% und einem Anteil eines thermoplastischen Kunststoffs (Hifax-Typ, Polyethylen) von 40 Gew.-% sowie geringe Bestandteile eines Phasenvermittlers. Die Trägerschicht 2 besteht zu 100 % aus dem thermoplastischen Werkstoff Polypropylen. Die Profilleiste 1 ist im Koextrusionsverfahren gefertigt, und die Trägerschicht 5 und die Dekorschicht 2 sind unmittelbar benachbart angeordnet. Die Profilleiste 1 weist im nicht nachgearbeiteten Zustand eine Breite von ca. 43 mm auf.
Durch spanabhebende Nachbearbeitung wird die Breite der Profilleiste 1 auf die Breite der stirnseitigen Kante 9 des als Möbelplatte ausgebildeten Gegenstandes 7 abgestimmt, und beträgt im nachgearbeiteten Zustand ca. 40 mm. Die Gesamtdicke der Profilleiste 1, die sich senkrecht zur Sichtseite 3 bzw. Unterseite 6 der Profilleiste 1 bemisst, beträgt ca. 1,5 mm. Ein Verhältnis einer Dicke der Dekorschicht 2 zu einer Dicke der Trägerschicht 5 beträgt ca. vier, wobei die Dekorschicht 2 eine Dicke von ca. 1,2 mm aufweist und die Trägerschicht 5 eine Dicke von ca. 0,3 mm aufweist. Die Trägerschicht 5 ist in einem Farbton eingefärbt, welcher im Wesentlichen dem Grundfarbton der Lederfasern 4 und dem Grundfarbton der Dekorschicht 2 entspricht. Der Gesamtfarbton der Profilleiste 1 ist auf einen Gesamtfarbton der Oberfläche 8 des Gegenstands 7 abgestimmt.

Ein Verfahren zur Herstellung der erfindungsgemäßen Profilleiste 1 umfasst die folgenden Schritte:
a) Überführen eines Werkstoffgemischs mit einem Anteil an zerkleinertem Ledermaterial 4 in einen Zustand, in welchem das Werkstoffgemisch im Extrusionsverfahren verarbeitbar ist,
b) Überführen eines thermoplastischen Werkstoffs in einen Zustand, in welchem der thermoplastische Werkstoff im Extrusionsverfahren verarbeitbar ist, und
c) Verarbeiten des Werkstoffgemischs und des thermoplastischen Werkstoffs
im Wege der Koextrusion zu der erfindungsgemäßen Profilleiste 1.
Die Gewinnung des thermoplastischen Werkstoffs wird als bekannt angesehen und daher an dieser Stelle nicht näher erläutert. Das zerkleinerte Ledermaterial 4 kann als Vielzahl von Lederfasern, Granulat, Mehl oder dergleichen vorliegen und wird vorzugsweise aus Lederabfällen gewonnen.

In Schritt a) wird ein als Granulat vorliegendes Lederfaser-/Kunststoffgemisch für die Dekorschicht 2 erhitzt, so dass der als Bindemittel eingesetzte, thermoplastische Kunststoff in den flüssigen oder zumindest zählplastischen Zustand versetzt wird.
Die Massetemperatur des Werkstoffgemischs sollte eine Temperatur von + 220 °C nicht überschreiten, um eine Beeinträchtigung des zerkleinerten Ledermaterials 4 zu verhindern.

In Schritt b) wird der thermoplastische Werkstoff für die Trägerschicht 5 aufgeschmolzen bzw. in den flüssigen oder zumindest zählplastischen Zustand versetzt.

In Schritt c) werden das Werkstoffgemisch für die Dekorschicht 2 und der thermoplastische Kunststoff für die Trägerschicht 2 im Koextrusionsverfahren zusammengeführt, so dass die Dekorschicht 2 und die Trägerschicht 2 stoffschlüssig verbunden und einstückig ausgebildet sind.

In einem Schritt d) kann die Profilleiste 1 mit einer Imprägnierung beaufschlagt und/oder an der Sichtseite 3 mit einem transparenten Wachs und/oder Lack beschichtet werden.

In einem Schritt e) kann die Profilleiste 1 an der Sichtseite 3 mit einer Prägung versehen werden, die einer Lederoberfläche nachempfunden ist und eine Lederoberflächenstruktur nachbildet. Dabei wird die Profilleiste 1, insbesondere die Dekorschicht 2 verdichtet.
Schritt e) kann vor und/oder nach Schritt d) ausgeführt werden.
Schritt d) und/oder Schritt e) kann auch weggelassen werden.

Es ist möglich, anstelle des zerkleinerten Ledermaterials 4 oder ergänzend zu dem zerkleinerten Ledermaterial 4 ein anderes zerkleinertes Material, vorzugsweise organisches Material, bevorzugt organisches Fasermaterial, in feiner Verteilung in der erfindungsgemäßen Profilleiste 1 zu verwenden.

Die Profilleiste 1 ist vorzugsweise flexibel und bevorzugt zu einer Rolle aufrollbar.

## Patentansprüche

1. Profilleiste (1), vorzugsweise Kantenband, mit einem mehrschichtigen Aufbau, wobei zumindest eine Schicht (2) der Profilleiste (1) ein zerkleinertes Ledermaterial (4) enthält und zumindest eine Schicht (2) der Profilleiste (1) im Extrusionsverfahren gefertigt ist.

2. Profilleiste (1) nach Anspruch 1, **dadurch gekennzeichnet, dass** die Profilleiste (1) im Koextrusionsverfahren gefertigt ist.

3. Profilleiste (1) nach einem der vorangegangenen Ansprüche, **dadurch gekennzeichnet, dass** die Profilleiste (1) eine Dekorschicht (2) aufweist, die das zerkleinerte Ledermaterial (4) enthält und die an einer Sichtseite (3) der Profilleiste (1) sichtbar ist.

4. Profilleiste (1) nach einem der vorangegangenen Ansprüche, **dadurch gekennzeichnet, dass** die Dekorschicht (2) ein Biopolymer, vorzugsweise Kollagen enthält.

5. Profilleiste (1) nach einem der vorangegangenen Ansprüche, **dadurch gekennzeichnet, dass** die Dekorschicht (2) Lederfasern (4) enthält.

6. Profilleiste (1) nach einem der vorangegangenen Ansprüche, **dadurch gekennzeichnet, dass** ein Anteil des zerkleinerten Ledermaterials (4) in der Dekorschicht (2) zwischen 10 und 90 Gew.-%, vorzugsweise zwischen 30 und 70 Gew.-%, bevorzugt zwischen 40 und 60 Gew.-%, und besonders bevorzugt 50 Gew.-% beträgt.

7. Profilleiste (1) nach einem der vorangegangenen Ansprüche, **dadurch gekennzeichnet, dass** die Dekorschicht (2) aus einem thermoplastisch verarbeitbaren Kunststoff, vorzugsweise aus einem Polyolefin oder aus Acrylnitril-Butadien-Styrol oder aus Polymethylmethacrylat oder aus Polyethylenterephthalat oder aus Polyvinylchloriden oder aus Polycarbonaten besteht oder aus Mischungen dieser.

8. Profilleiste (1) nach einem der vorangegangenen Ansprüche, **dadurch gekennzeichnet, dass** ein Anteil des Kunststoffs in der Dekorschicht (2) zwischen 90 und 10 Gew.-%, vorzugsweise zwischen 70 und 30 Gew.-%, bevorzugt zwischen 60 und 40 Gew.-%, und besonders bevorzugt 50 Gew.-% beträgt.

9. Profilleiste (1) nach einem der vorangegangenen Ansprüche, **dadurch gekennzeichnet, dass** die Profilleiste (1) eine Trägerschicht (5) aufweist, die eine gegenüber der Dekorschicht (2) unterschiedliche chemische Zusammensetzung aufweist.

10. Profilleiste (1) nach einem der vorangegangenen Ansprüche, **dadurch gekennzeichnet, dass** die Trägerschicht (5) aus einem thermoplastisch verarbeitbaren Kunststoff, vorzugsweise aus einem Polyolefin oder aus Acrylnitril-Butadien-Styrol oder aus Polymethylmethacrylat oder aus Polyethylenterephthalat oder aus Polyvinylchloriden oder aus Polycarbonaten besteht oder aus Mischungen dieser.

11. Profilleiste (1) nach einem der vorangegangenen Ansprüche, **dadurch gekennzeichnet, dass** ein Verhältnis einer Dicke der Dekorschicht (2) zu einer Dicke der Trägerschicht (5) zwischen 0,1 und 10, vorzugsweise zwischen 1 und 5, bevorzugt 4 beträgt.

12. Profilleiste (1) nach einem der vorangegangenen Ansprüche, **dadurch gekennzeichnet, dass** die Dekorschicht (2) und/oder die Trägerschicht (5) wenigstens einen Farbstoff enthält.

13. Profilleiste (1) nach einem der vorangegangenen Ansprüche, **dadurch gekennzeichnet, dass** die Trägerschicht (5) in einem Farbton eingefärbt ist, welcher im Wesentlichen einem Grundfarbton der Dekorschicht (2) entspricht.

14. Gegenstand (7), insbesondere Möbelstück oder dergleichen, mit einer Profilleiste (1) nach einem der vorangegangenen Ansprüche.

15. Gegenstand (7) nach Anspruch 25, wobei die Profilleiste (1) mit einer der Sichtseite (3) abgewandten Unterseite (6) an dem Gegenstand (7) angebracht ist.
